# EUROPEAN PATENT SPECIFICATION

(11) **EP 0 508 751 B1**
(45) Date of publication and mention of the grant of the patent: **06.12.1995**
(21) Application number: 92303116.5
(22) Date of filing: 08.04.1992
(51) Int. Cl.: C09K 21/02

(54) **Improvements in and relating to intumescent fire seals and their method of manufacture**
Anschwellende Feuerschutz-Fugenabdichtungen und Verfahren zu ihrer Herstellung
Dispositifs d'étanchéité gonflants coupe-feu, ainsi que leur procédé de production

(30) Priority: 09.04.1991 GB 9107466
(43) Date of publication of application: 14.10.1992
(73) Proprietor: ENVIRONMENTAL SEALS LIMITED, Dover, Kent, CT15 5HR (GB)
(72) Inventor: Ward, Derek Alfred, Dover, Kent CT15 5HR (GB)
(74) Representative: Fry, Alan Valentine

(56) References cited:
- EP-A- 0 009 109
- WO-A-91/11498
- AT-A- 360 130
- DE-B- 1 176 546
- DATABASE WPIL Week 8342, Derwent Publications Ltd., London, GB; AN 83-791755

## Description

This invention relates to methods of producing intumescent fire seals and to fire seals produced by such methods. More especially, but not exclusively, this invention concerns a method of producing intumescent fire seals in the form of non-woven mats, sheets, blocks and shaped products of fibrous material capable of being used as a product in its own right or being applied directly to or as a lining or filling for a structure to provide for that structure and its surrounds a fire resistant barrier.

Intumescent fire seals are of course well known. Typically, these fire seals take the form of rigid boards and sheets, and cannot readily be applied directly to such structures as shaped doors or panels; neither can they effectively be used to fill or line many spaces.

WO-A-9111498 discloses an intumescent fire protection composition which comprises comparatively small amounts of exfoliable laminar minerals such as expandable graphite with one or more binders and one or more of a range of intumescent char-forming material. Fibrous material may be incorporated into a mix formed of the exfoliable laminar minerals and char-forming materials to enhance the adhesion of the char to a substrate on which the composition is coated.

AT-A-360130 discloses a thermally expandable sealant which foams in the event of a fire thereby to effect a seal. The sealant comprises a fleece or fabric carrier which is coated with a composition based upon expandable graphite, polychlorobutadiene, a resin and, optionally, inorganic fibres.

JP-A-53152086 discloses a sealing material which is produced by impregnating raw material of inorganic expanding material and fibres with inorganic binder.

The present invention sets out to provide a method of producing an intumescent fire sealant material which provides enhanced protection against fire damage. Fire seals produced in accordance with the invention are typically flexible and are capable of being shaped into plane and intricate forms for application directly to a wide variety of surfaces using simple cutting tools.

According to the present invention in one aspect there is provided a method of producing an intumescent seal which comprises forming an aqueous slurry of ceramic fibres and a binder, and adding to the slurry exfoliating graphite in powder form.

The slurry may be cast onto a support surface, dried and rolled to form a sheet or mat of ceramic fibres intermixed with the exfoliating graphite powder. The exfoliating graphite powder may be mixed into the slurry or may be dispersed onto the surface of the slurry prior to drying. The viscosity of the slurry is such as to enable the graphite powder particles to be dispersed in the slurry prior to drying.

Alternatively, the slurry and added exfoliating graphite may be cast into a mould and dried to form a product of any desired shape and dimensions.

Fire seals produced by the methods referred to may comprise a non-woven mat or sheet. The fire seals may be enveloped wholly or partially in metallic foil.

The fire seals may take the form of a grill, a box or a collar for location about a pipe.

The exfoliating graphite powder may be present in an amount equal to between 1% and 40% by weight of the slurry mix. A preferred range is between 10% and 30% by weight. Typical graphite contents are 10%, 17% to 20%, and 30%.

The invention will now be described with reference to the following Examples of fire seals in accordance with the invention.

### EXAMPLE 1

An aqueous generally homogeneous slurry comprising ceramic fibres and PVA binder was produced and sprayed from a multi-nozzle spraying device onto a support surface in the form of a moving continuous belt driven by one or more rollers. A quantity of powdered exfoliating graphite was sprinkled onto the surface of the slurry coating from a vibrating sieve positioned above the moving belt and downstream of the spray device. The slurry coating with graphite powder particles dispersed thereon was then moved by the belt into and through one or more drying ovens to drive off the liquid content of the material. Compaction rolls positioned before and/or after the or each drying oven roll compacted the dried product to its final required thickness.

The resulting flexible sheet had a thickness of approximately 1 mm and contained approximately 10% by weight of exfoliating graphite.

On subjecting the sheet to a fire situation, the presence of the exfoliating graphite powder caused the sheet to expand in a multiplicity of directions to a thickness of the order of 15 mm. Additionally, the positive pressure created during expansion was of the order of 4 bar and the sheet provided in excess of 2 hours fire protection. It has been found that the degree of expansion and the inherent positive pressure achieved during this expansion varies in direct proportion to the amount of exfoliating graphite powder used. Thus, increases in thickness of between 15 mm to 100 mm for a sheet of between 1 mm and 3 mm thickness can be achieved with exfoliating graphite powder contents of between 10% and 40% by weight. The inherent positive pressure of the products also varies with the content of graphite powders, these pressures typically ranging from 4 bar to 20 bar. Such pressures are not affected by the presence of water.

Using the same slurry mix, a metal mesh was positioned on the moving belt prior to deposition of the slurry and graphite powder. After drying and compaction, it was found that the mesh was embedded within the non-woven mat and provided enhanced rigidity.

### EXAMPLE 2

An aqueous slurry similar to that of Example 1 was produced but with added PVA binder to form a less viscous slurry. Glass fibres were also added to the slurry to reduce viscosity. The slurry was then cast into a mould shaped in a complementary sense to a wall mounted grill and dried in an oven. After drying, the product was removed and its vertical and horizontal limbs encased in metallic foil.

When subjected to fire testing, the foiled fire seal rapidly expanded to fill completely the openings formed originally between the horizontal and vertical links of the grill. The foil stayed in place and the seal provided fire protection for a period in excess of 4 hours.

Metallic foil wrappings can be used with any shaped solid fire seal product of the invention. The presence of the foil greater assists the rapidity of the expansion process and also serves to confine the expanded material to gain full benefit from the positive pressure exerted during the expansion process.

As mentioned previously, fire seals produced in accordance with the invention can be applied directly to a surface to be protected by, for example, double sided adhesive tape or attached to a surface by a liquid adhesive, tacks, pins or, indeed, by any conventional means. The fibrous product can readily be dimensioned using scissors, guillotine or other cutting tool. In its flexible form, the seal can readily be made to follow the contour of a round or even a relatively intricate moulded or curved surface.

Sheets in accordance with the invention can be employed as intumescent linings for upgrading panelled doors, lathe and plaster ceilings and plasterboards to give enhanced fire protection. The sheets can also be used as underfloor barriers and infill material for fire doors. Also, clamps can readily be produced to embrace polyvinyl chloride pipes, the clamps operating to crush the pipes in the event of a fire. The sheet material can also be used to line metallic service boxes.

Glazing and sealing strips can readily be produced and be attached to suitable beads using, for example, adhesive or pins.

It will be understood that these are simply examples of many uses to which sheets in accordance with the invention can be put.

Typical thicknesses of products of the invention are 1 mm, 2 mm, 3 mm and 3¹/₂ mm. Typically, such products will contain 10%, 17% to 20%, 30% and 35% exfoliating graphite respectively. These products typically provide in excess of 2 hours, 4 hours, 6 hours, and 8 hours fire protection respectively, and, on expansion, a pressure of 4 bar, 7 bar, 15 to 20 bar and in excess of 20 bar is produced.

It will be appreciated that the intumescent fire seals described above are merely exemplary of fire seals in accordance with the invention and that modifications can readily be made thereto without departing from the true scope of the invention as set out in the appended claims.

## Claims

1. A method of producing an intumescent seal which comprises forming an aqueous slurry of fibrous material and a binder, and adding to the slurry exfoliating graphite, the method being characterised in that the added exfoliating graphite is in powder form.

2. A method as claimed in Claim 1 wherein the slurry is cast onto a moving support surface, dried and rolled to form a sheet or mat of fibrous material impregnated with the exfoliating graphite powder.

3. A method as claimed in Claim 1 or Claim 2 wherein the fibrous material comprises ceramic fibres.

4. A method as claimed in any one of Claims 1 to 3 wherein the exfoliating graphite powder is dispersed onto the surface of the slurry prior to drying.

5. A method as claimed in any one of Claims 1 to 3 wherein the exfoliating graphite powder is mixed into the slurry.

6. A method as claimed in Claim 1 wherein the slurry and added exfoliating graphite is cast into a mould and dried to form a product of a desired shape and dimensions.

7. A method as claimed in any one of Claims 1 to 6 wherein the exfoliating graphite is present in the slurry in an amount between 1% and 40% by weight.

8. A method as claimed in Claim 7 wherein the exfoliating graphite is present in the slurry in an amount between 10% and 30% by weight.

9. A fire seal produced by a method as claimed in any one of Claims 1 to 8 wherein the product is enveloped wholly or partially in metallic foil or the like.

10. A fire seal as claimed in claim 2 wherein a metal mesh is positioned in the support surface prior to deposition of the slurry and graphite powder.

## Patentansprüche

1. Ein Verfahren zur Herstellung einer schaumschichtbildenden Abdichtung durch Herstellung eines wässerigen Schlammes aus einem Fasermaterial und Bindemittel, wobei dem Schlamm abschiefernder Graphit zugesetzt wird und das Verfahren dadurch gekennzeichnet ist, daß der zugesetzte abschiefernde Graphit pulverförmig ist.

2. Ein Verfahren gemäß Anspruch 1, dadurch gekennzeichnet, daß der Schlamm auf eine sich bewegende Unterlage gegossen und anschließend getrocknet und zu einer Faserplatte oder -Matte gewalzt wird.

3. Ein Verfahren gemäß Anspruch 1 oder Anspruch 2, wobei das Fasermaterial Keramikfasern enthält

4. Ein Verfahren gemäß Anspruch 1 bis 3, wobei der abschiefernde Graphit vor Trocknung auf die Oberfläche des Schlammes dispergiert wird.

5. Ein Verfahren gemäß Anspruch 1 bis 3, wobei der abschiefernde Graphit mit dem Schlamm gemischt wird.

6. Ein Verfahren gemäß Anspruch 1, wobei der Schlamm und der zugefügte abschiefernde Graphit für ein Produkt mit einer gewünschten Form und Abmessungen in eine Form gegossen und getrocknet wird.

7. Ein Verfahren gemäß Anspruch 1 bis 6, wobei der Gewichtsanteil des abschiefernden Graphits im Schlamm zwischen 1% und 40% liegt.

8. Ein Verfahren gemäß Anspruch 7, wobei der Gewichtsanteil des abschiefernden Graphits im Schlamm zwischen 10% und 30% beträgt.

9. Eine Feuerabdichtung gemäß dem in Anspruch 1 bis 8 beschriebenen Verfahren, wobei das Produkt vollständig oder teils mit Metallfolie oder Ähnlichem umgeben ist.

10. Eine Feuerabdichtung gemäß Anspruch 2, wobei ein Metallgitter vor Auftragen des Schlammes und des abschiefernden Graphits auf die Unterlage gelegt wird.

## Revendications

1. Une méthode pour produire un joint intumescent qui comprend la formation d'un coulis aqueux de matériau fibreux et un liant, et l'ajout au coulis de graphite exfoliant, la méthode étant caractérisée en ce que le graphite exfoliant ajouté se présente sous forme de poudre.

2. Une méthode comme revendiquée dans la revendication 1 dans laquelle le coulis est coulé sur une surface de support mobile, séché et roulé pour former une feuille ou un tapis de matériau fibreux imprégné de la poudre de graphite exfoliant.

3. Une méthode comme revendiquée dans la revendication 1 ou dans la revendication 2 dans laquelle le matériau fibreux comprend des fibres céramiques.

4. Une méthode comme revendiquée dans l'une quelconque des revendications 1 à 3 dans laquelle la poudre de graphite exfoliant est dispersée sur la surface du coulis avant le séchage.

5. Une méthode comme revendiquée dans l'une quelconque des revendications 1 à 3 dans laquelle la poudre de graphite exfoliant est mélangée dans le coulis.

6. Une méthode comme revendiquée dans la revendication 1 dans laquelle le coulis et le graphite exfoliant ajouté est coulé dans un moule et séché pour former un produit d'une forme et des dimensions désirées.

7. Une méthode comme revendiquée dans l'une quelconque des revendications 1 à 6 dans laquelle le graphite exfoliant est présent dans le coulis dans une quantité comprise entre 1% et 40% en poids.

8. Une méthode comme revendiquée dans la revendication 7 dans laquelle le graphite exfoliant est présent dans le coulis dans une quantité comprise entre 10% et 30% en poids.

9. Un joint ignifuge produit par une méthode comme revendiquée dans l'une quelconque des revendications 1 à 8 dans laquelle le produit est enveloppé en totalité ou en partie dans une feuille métallique ou autre chose du même genre.

10. Un joint ignifuge comme revendiqué dans la revendication 2 dans lequel une toile métallique est positionnée dans la surface de support avant le dépôt du coulis et de la poudre de graphite.
